(19) Europäisches Patentamt
European Patent Office
Office européen des brevets

(11) Veröffentlichungsnummer: **0 196 468**
**B1**

(12) # EUROPÄISCHE PATENTSCHRIFT

(45) Veröffentlichungstag der Patentschrift: **24.05.89**

(51) Int. Cl.⁴: **C 08 J 7/12**

(21) Anmeldenummer: **86102684.7**

(22) Anmeldetag: **01.03.86**

(54) **Verfahren zur Herstellung fluorierter Oberflächen von Polymeren.**

(30) Priorität: **30.03.85 DE 3511743**

(43) Veröffentlichungstag der Anmeldung:
**08.10.86 Patentblatt 86/41**

(45) Bekanntmachung des Hinweises auf die Patenterteilung:
**24.05.89 Patentblatt 89/21**

(84) Benannte Vertragsstaaten:
**AT BE CH FR GB IT LI NL SE**

(56) Entgegenhaltungen:
**EP-A- 0 102 885**
**DE-A- 1 905 094**
**US-A- 2 811 468**
**US-A- 3 998 180**

**GMELINS HANDBUCH DER ANORGANISCHEN CHEMIE, achte völlig neu bearbeitete Auflage, ALUMINIUM, Teil B, DIE VERBINDUNGEN DES ALUMINIUMS, System-Nummer 35, 1934, Seite 156, Verlag Chemie GmbH, Berlin, DE**

(73) Patentinhaber: **MESSER GRIESHEIM GMBH, Hanauer Landstrasse 330, D-6000 Frankfurt/Main 1 (DE)**

(72) Erfinder: **Eschwey, Manfred, Dr., Kreuzbergstrasse 7 H, D-4000 Düsseldorf 31 (DE)**
Erfinder: **van Bonn, Rolf, Salzachstrasse 5, D-4100 Duisburg 29 (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung fluorierter Oberflächen von Polymeren nach dem Oberbegriff des Anspruches 1.

Im Automobilbau geht man zunehmend dazu über, die Kraftstoffbehälter aus Polymeren, insbesondere Polyethylen, herzustellen. Diese Kraftstoffbehälter aus Kunststoff sind leichter und billiger als die herkömmlichen aus Stahlblech. Ausserdem können sie ohne Schwierigkeiten kompliziert gestaltet werden, so dass der vorhandene Raum besser ausgenutzt und das Behältervolumen vergrössert werden kann.

Kraftstoffbehälter aus Kunststoff sind jedoch für Kraftstoff nicht völlig dicht, da ständig geringe Kraftstoffmengen durch Permeation nach aussen entweichen. In jüngerer Zeit wird verlangt, die Permeationsrage erheblich zu verkleinern. Dies kann man mit gutem Erfolg erreichen, indem man die innere Oberfläche der Behälter einige Zeit der Einwirkung eines fluorhaltigen Behandlungsgases aussetzt. Die Oberfläche wird hierbei durch Fluor in Form von Fluorkohlenstoff- und Fluorkohlenwasserstoffverbindungen belegt. Diese fluorhaltige Schicht setzt die Permeationsrate erheblich herab. Wenn man das fluorhaltige Behandlungsgas zugleich als Blasmedium bei der Blasextrudation der Kraftstoffbehälter verwendet, spricht man von der sogenannten In-line-Fluorierung. Führt man dagegen die Fluorierung an fertig extrudierten Kraftstoffbehältern durch, spricht man von der Off-line-Fluorierung. Derartige Verfahren sind beispielsweise bekannt aus den DE-PS 2 401 948 und DE-PS 2 644 508.

Die Fluorierung der Oberflächen von Kunststoffen beeinflusst jedoch nicht nur im hohen Masse das Permeationsverhalten, sondern es wird auch die Abriebfestigkeit, die chemische, thermische und mechanische Beständigkeit, das Klebeverhalten und die Benetzbarkeit beeinflusst. Aus diesem Grunde ist die Erfindung nicht auf die Fluorierung der inneren Oberfläche von Kunststoff-Kraftstoffbehältern beschränkt. Bei der Fluorierung wird die Polymeroberfläche einem Angriff von elementarem Fluor ausgesetzt. Im einfachsten Fall, z.B. bei Polyethylen, kommt es dabei zu einer stufenweise radikalischen Substitution der CH-Bindungen durch CF-Bindungen.

Wie umfangreiche eigene Untersuchungen ergeben haben, resultieren je nach den Reaktionsbedingungen stark unterschiedlich strukturierte fluorierte Schichten. Zur Erzielung bestimmter günstiger und eindeutig reproduzierbarer Oberflächeneffekte für das obengenannte Materialverhalten ist die genaue Einhaltung bestimmter Strukturparameter einer solchen fluorierten Oberfläche von erheblicher Bedeutung. Hierbei handelt es sich in erster Linie um Schichtdicke, Gleichmässigkeit der Fluorbelegung, Verteilung von $CH_2$–, CHF– und $CF_2$-Gruppen und das Tiefenprofil. Ausserdem muss die unterschiedliche Oberflächenreaktivität vieler Kunststoffe, die gelegentlich schon von Charge zu Charge schwankt, berücksichtigt werden. Für das Entstehen definierter fluorierter Schichten ist somit die Einhaltung und Wahl bestimmter Reaktionsbedingungen unerlässlich. Hierzu greift man bisher auf empirische Erfahrungswerte zurück. Um dies zu vermeiden, wird in der EP-A-102 885 vorgeschlagen, den Fluorgehalt des abströmenden Behandlungsgases zu messen, um den Grad der Fluorbelegung zu bestimmen. Wegen der ausserordentlich hohen chemischen Reaktionsfreudigkeit von Fluor ist dies jedoch ausserordentlich schwierig. In der EP-A-102 885 wird daher auch keine praktikable Methode angegeben.

Der Erfindung liegt die Aufgabe zugrunde, ein Verfahren zu schaffen, welches es ermöglicht, den Grad der Fluorbelegung im laufenden Fertigungsprozess durch Ermittlung der Fluorkonzentration im Prozess zu bestimmen.

Ausgehend von dem im Oberbegriff des Anspruches 1 berücksichtigten Stand der Technik ist diese Aufgabe erfindungsgemäss gelöst mit den im kennzeichnenden Teil des Anspruches 1 angegebenen Merkmalen.

Vorteilhafte Weiterbildungen der Erfindung sind in den Unteransprüchen angegeben.

Die für das erfindungsgemässe Verfahren erforderliche quantitative Bestimmung des freigesetzten Sauerstoffs ist Stand der Technik und kann nach bewährten Methoden mit hoher Präzision durchgeführt werden. Die kontinuierliche Durchführung des erfindungsgemässen Verfahrens ist in der Regel zweckmässig, jedoch nicht immer erforderlich. Bei der Fertigung von Kunststoff-Kraftstoffbehältern lässt es sich mit besonderem Vorteil bei der Off-line-Fluorierung einsetzen. Bei der In-line-Fluorierung kann es jedoch auch durchgeführt werden, da hierbei das fluorhaltige Blasmedium ebenfalls in definierter Menge für jeden Kraftstoffbehälter eingesetzt wird.

Bei der dem erfindungsgemässen Verfahren zugrundeliegenden Reaktion $Al_2O_3 + 3F_2 \rightarrow 2AlF_3 + 3/2\ O_2$ wird pro Mol Fluor 1/2 Mol Sauerstoff freigesetzt. Der Sauerstoff wird quantitativ mit Hilfe eines kommerziellen Sauerstoffmessgerätes bestimmt. Über die Abnahme der Fluorkonzentration im Prozessgas lässt sich somit leicht der Grad der Fluorbelegung im laufenden Fertigungsprozess bestimmen. Bei Erreichen eines bestimmten Fluorumsatzes wird die Reaktion durch Spülen des Reaktionsraumes mit Inertgas oder durch Evakuieren abgebrochen. Das erfindungsgemässe Verfahren ermöglicht die Ausbildung streng reproduzierbarer Fluorschichten. Auf die teilweise sehr aufwendigen direkten und indirekten nachträglichen Prüfverfahren kann weitgehend verzichtet werden.

Zwei Ausführungsbeispiele der Erfindung sollen anhand der beigefügten Zeichnungen erläutert werden. Es zeigen:

Fig. 1 ein Schema des erfindungsgemässen Verfahrens bei der Off-line-Fluorierung von einzelnen Kraftstoffbehältern,

Fig. 2 das Verfahrensprinzip bei der gleichzeitigen Off-line-Fluorierung mehrerer Kraftstoffbehälter.

Bei dem in Fig. 1 dargestellten Verfahren befindet sich der Kunststoff-Kraftstoffbehälter 1 in einem evakuierbaren Druckbehälter 2, welcher mittels einer elektrischen Heizung 3 auf einer Temperatur zwischen 20 und 80 °C gehalten werden kann.

Zur Durchführung der Fluorierung wird zunächst der Druckbehälter 2 mittels der Saugpumpe 4 über das Ventil 5 und die Saugleitung 6 evakuiert. Bei geöffnetem Ventil 7 wird hierbei gleichzeitig der Kunststoff-Kraftstoffbehälter 1 über Leitung 8 und Adsorber 9 evakuiert. Nach dem Schliessen der Ventile 5 und 7 lässt man durch Leitung 10 und Ventil 11 das fluorhaltige Behandlungsgas in den Kunststoff-Kraftstoffbehälter 1 einströmen. Hierdurch wird eine sehr gleichmässige Verteilung des Fluors auf der gesamten inneren Oberfläche erreicht. Gleichzeitig lässt man durch Leitung 12 und Ventil 13 Stickstoff in den Druckbehälter 2 einströmen. Die Ventile 14, 15 und 16 sind hierbei geschlossen. Der Druck im Druckbehälter 2 kann hierbei abweichend vom Druck im Kunststoff-Kraftstoffbehälter 1 eingestellt werden. Der Fluorgehalt des Behandlungsgases beträgt in der Regel 3 bis 10 Vol.-%. Der Druck im Kunststoff-Kraftstoffbehälter 1 beträgt in aller Regel zwischen 100 und 900 mbar. Die Behandlungszeit liegt gewöhnlich zwischen 1 und 15 Min.

Zur Analyse des Restfluorgehaltes wird gemäss der Erfindung ein kleiner Teil des im Kunststoff-Kraftstoffbehälter 1 befindlichen Behandlungsgases ständig über das Ventil 16 und den Aluminiumoxidkontakt 17 geleitet. Die übrigen Ventile sind hierbei geschlossen. Hierbei findet im Aluminiumoxidkontakt 17 die Umsetzung $Al_2O_3 + 3F_2 \rightarrow 2AlF_3 + 3/2\ O_2$ statt. Pro Mol Fluor wird ein halbes Mol Sauerstoff freigesetzt. Die quantitative Bestimmung des gebildeten Sauerstoffs erfolgt mit dem Sauerstoffmessgerät 18. Der Zylinder 19 dient zur Gasprobennahme für eine erweiterte Analytik, z.B. zur Bestimmung des HF-Gehaltes. Mit Hilfe des erfindungsgemässen Verfahrens gelingt es somit, über die Messung des Fluorverbrauchs die Oberflächenbelegung des Kunststoff-Kraftstoffbehälters 1 mit Fluor während des Prozesses zu verfolgen und zu steuern.

Ist der gewünschte Umsetzungsgrad erreicht, werden der Kunststoff-Kraftstoffbehälter 1 und der Druckbehälter 2 bei geöffneten Ventilen 5 und 7 evakuiert. Das im Kunststoff-Kraftstoffbehälter 1 befindliche Gasgemisch wird dabei im Adsorber 9 entsorgt, welcher das nicht umgesetzte Fluor und das Reaktionsprodukt Fluorwasserstoff festhält. Anschliessend wird der Kunststoff-Kraftstoffbehälter 1 über Leitung 12 und Ventil 14 mit Stickstoff gespült und anschliessend leer gepumpt. Danach lassen sich im Kunststoff-Kraftstoffbehälter 1 keine Fluorwasserstoffspuren mehr nachweisen. Nach Belüftung der gesamten Apparatur kann der permeationsgeschützte Kunststoff-Kraftstoffbehälter 1 entnommen werden.

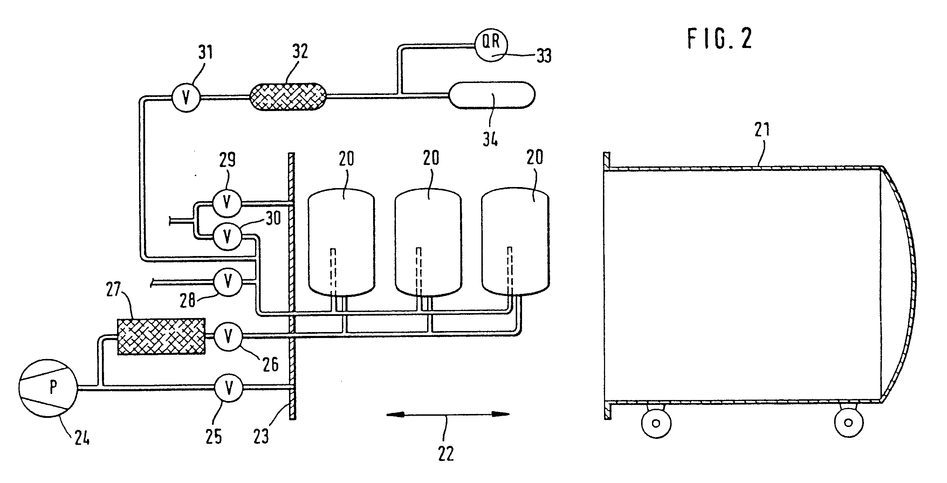

Fig. 2 zeigt die Anwendung des erfindungsgemässen Verfahrens bei der gleichzeitigen Fluorierung mehrerer Kunststoff-Kraftstoffbehälter 20, welche sich in einem entsprechend grossen Druckbehälter 21 befinden. Der Pfeil 22 deutet an, dass der Druckbehälter 21 vom Deckel 23 zur Be- und Entladung mit Kunststoff-Kraftstoffbehältern 20 weggefahren werden kann.

Nachdem der Druckbehälter 21 durch den Dekkel 23 geschlossen ist, werden die erwärmten Kunststoff-Kraftstoffbehälter 20 bei geöffneten Ventilen 25 und 26 mittels der Saugpumpe 24 evakuiert. Sobald das gewünschte Endvakuum erreicht ist, lässt mandas fluorhaltige Behandlungsgas, ein Gemisch aus Fluor und Stickstoff, über das Ventil 28 in die Kunststoff-Kraftstoffbehälter 20 strömen. Gleichzeitig lässt man durch das Ventil 29 Stickstoff in den Druckbehälter 21 einströmen, um dort einen gewünschten Druck zu erhalten. Nach Ablauf der Behandlungszeit werden der Druckbehälter 21 und die Kunststoff-Kraftstoffbehälter 20 über die Ventile 25 und 26 mittels der Saugpumpe 24 evakuiert. Unverbrauchtes Fluor und das Reaktionsprodukt Fluorwasserstoff wird hierbei am Adsorber 27 festgehalten. Anschliessend werden die Kunststoff-Kraftstoffbehälter 20 über Ventil 30 mit Stickstoff gespült und leergepumpt. Nach dem Belüften der Apparatur können die permeationsgeschützten Kunststoff-Kraftstoffbehälter 20 entnommen werden.

Gemäss der Erfindung wird während der Behandlungszeit wiederum ständig eine kleine Menge Behandlungsgas über Ventil 31 abgezogen und im Aluminiumoxidkontakt 32 zur Reaktion gebracht. Der hierbei entstehende Sauerstoff wird durch das Sauerstoffmessgerät 33 gemessen, der Zylinder 34 dient wiederum zur Gasprobennahme für eine erweiterte Analytik.

## Patentansprüche

1. Verfahren zur Herstellung fluorierter Oberflächen von Polymeren, bei dem die Oberflächen einige Zeit zwecks Bildung von Fluorkohlenstoff- und Fluorkohlenwasserstoffverbindungen der Einwirkung eines fluorhaltigen Behandlungsgases von definierter Menge ausgesetzt werden und bei dem durch Ermittlung der Fluorkonzentration im Prozessgas der Grad der Fluorbelegung der Oberfläche festgestellt wird, dadurch gekennzeichnet, dass ein kleiner Teil des Behandlungsgases während der Einwirkungszeit abgezogen und über einen aktivierten Aluminiumoxidkontakt (17, 32) zwecks Durchführung der Reaktion

$$Al_2O_3 + 3F_2 \rightarrow 2AlF_3 + 3/2\ O_2$$

geleitet wird, um über die quantitative Bestimmung des freigesetzten Sauerstoffs die Fluorkonzentration im Restgas festzustellen.

2. Verfahren nach Anspruch 1, dadurch gekennzeichnet, dass das Leiten des abgezogenen Behandlungsgases über den Aluminiumoxidkontakt und die Bestimmung des freigesetzten Sauerstoffes kontinuierlich erfolgen.

3. Verfahren nach Anspruch 1 oder 2, dadurch gekennzeichnet, dass es sich bei den Oberflächen

um die Innenoberflächen von Kunststoff-Kraftstoffbehältern (1, 20) aus Polyethylen handelt und die Menge des Behandlungsgases durch das Volumen des Kraftstoffbehälters definiert ist.

4. Verfahren nach Anspruch 3, dadurch gekennzeichnet, dass es bei der Off-line-Fluorierung von fertig extrudierten Kraftstoffbehältern durchgeführt wird.

## Revendications

1. Procédé pour réaliser des surfaces fluorées de polymère, selon lequel on expose la surface pendant un certain temps à une quantité déterminée de gaz de traitement contenant du fluor pour former des liaisons carbofluorées et hydrocarbofluorées, et selon lequel en déterminant la concentration du fluor contenu dans le gaz de traitement, on détermine le degré de revêtement fluor de la surface, procédé caractérisé en ce qu'on extrait une faible partie du gaz de traitement pendant la durée d'action et on fait passer cette quantité de gaz sur un contact d'alumine activé (17, 32) pour effectuer la réaction:

$$Al_2O_3 + 3F_2 \rightarrow 2AlF_3 + 3/2\ O_2$$

pour déterminer la concentration en fluor dans le gaz résiduel par détermination quantitative de l'oxygène libéré.

2. Procédé selon la revendication 1, caractérisé en ce qu'on fait passer le gaz de traitement extrait sur le contact d'alumine et on détermine en continu l'oxygène libéré.

3. Procédé selon la revendication 1 ou 2, caractérisé en ce que les surfaces sont constituées par les surfaces internes de réservoirs de carburant en matière synthétique (1, 20) en polyéthylène et la quantité de gaz de traitement est déterminée par le volume du réservoir de carburant.

4. Procédé selon la revendication 3, caractérisé en ce qu'il est effectué sous la forme du fluorure hors ligne du réservoir de carburant extrudé, terminé.

## Claims

1. Process for the production of fluorinated surfaces of polymers, in which the surfaces are exposed for some time to a defined amount of a fluorine-containing treatment gas in order to form fluorocarbon and fluorinated hydrocarbon compounds, and in which the degree of fluorination of the surface is analyzed by determining the fluorine concentration in the process gas, characterized in that a small proportion of the treatment gas is withdrawn during the exposure time and passed over an activated aluminium oxide catalyst (17, 32) in order to carry out the reaction

$$Al_2O_3 + 3F_2 \rightarrow 2AlF_3 + 3/2\ O_2$$

for analysing the fluorine concentration in the remainder of the gas by quantitatively determining the liberated oxygen.

2. Process according to Claim 1, characterized in that the passing of the withdrawn treatment gas over the aluminium oxide catalyst and the determination of the liberated oxygen are carried out continuously.

3. Process according to Claim 1 or 2, characterized in that the surfaces are internal surfaces of plastic fuel tanks (1, 20) made of polyethylene and the amount of treatment gas is defined by the volume of the fuel tank.

4. Process according to Claim 3, characterized in that it is carried out during off-line fluorination of ready-extruded fuel tanks.

1 / 2

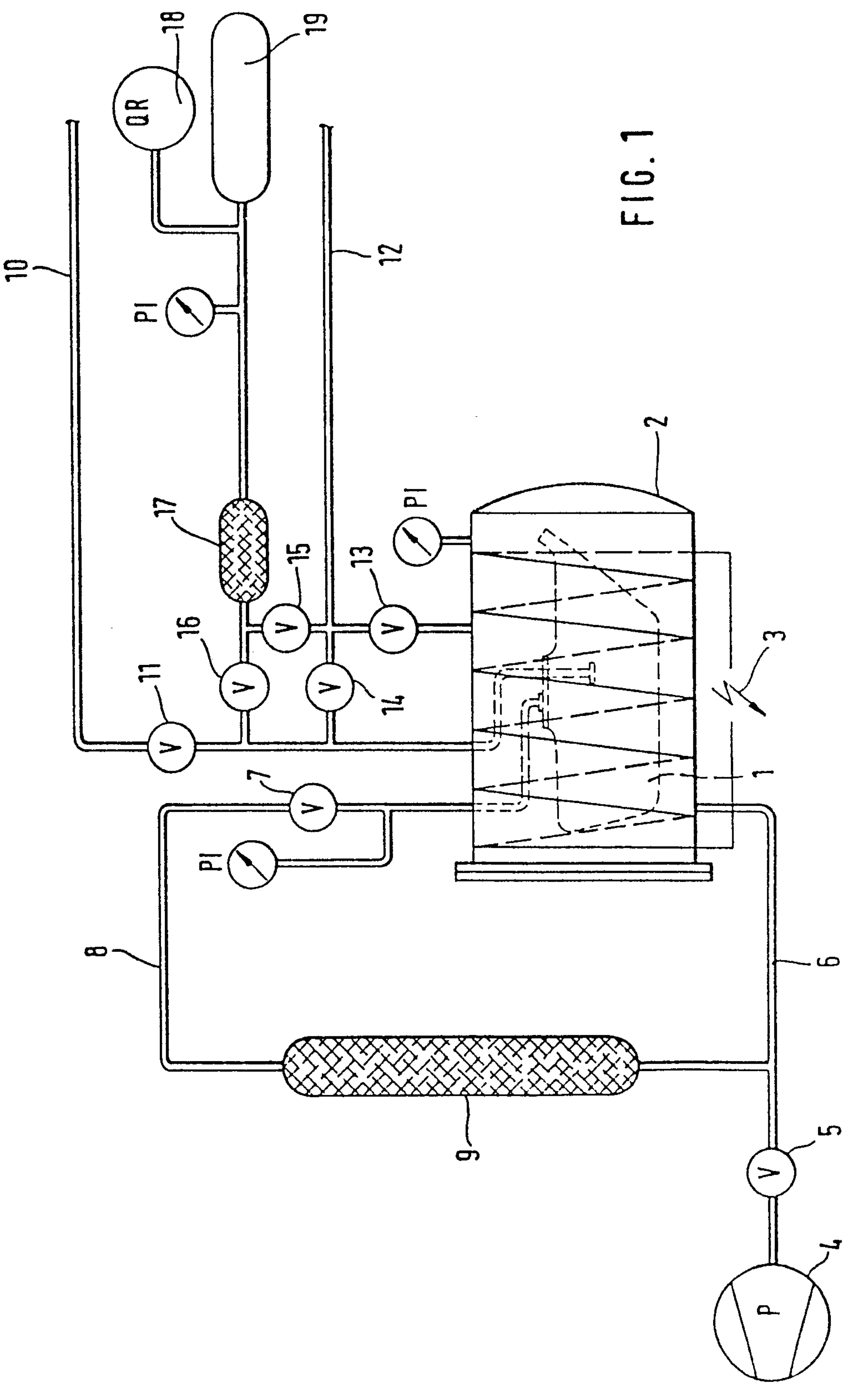


FIG. 1

2 / 2

FIG. 2